# EUROPEAN PATENT SPECIFICATION

(11) **EP 3 518 671 B1**
(45) Date of publication and mention of the grant of the patent: **25.10.2023**
(21) Application number: 17857259.0
(22) Date of filing: 25.09.2017
(51) Int. Cl.: A01M 23/00, H04L 67/10, H04L 67/125, H04L 12/44, H04L 67/54, H04L 67/56, H04L 12/46, H04L 67/50, A01M 31/00, H04L 12/66

(54) **LONG RANGE WIRELESS NOTIFICATION SYSTEM AND METHOD FOR ELECTRONIC RODENT TRAPS**
DRAHTLOSES BENACHRICHTIGUNGSSYSTEM MIT GROSSER REICHWEITE UND VERFAHREN FÜR ELEKTRONISCHE NAGETIERFALLEN
SYSTÈME ET PROCÉDÉ DE NOTIFICATION SANS FIL À LONGUE PORTÉE POUR PIÈGES À RONGEURS ÉLECTRONIQUES

(30) Priority: 30.09.2016 US 201662402428 P; 21.09.2017 US 201715711601
(43) Date of publication of application: 07.08.2019
(73) Proprietor: Woodstream Corporation, Lititz, PA 17543 (US)
(72) Inventor: DALY, JR., Thomas J., Lititz, Pennsylvania 17543 (US)
(74) Representative: Osterhoff, Utz
(86) International application number: PCT/US2017/053220
(87) International publication number: WO 2018/063983

(56) References cited:
- WO-A1-2012/054397
- US-A1- 2007 013 513
- US-A1- 2007 013 513
- US-A1- 2009 193 707
- US-A1- 2009 238 243
- US-A1- 2010 134 301
- US-A1- 2010 308 956
- US-A1- 2013 031 824
- US-A1- 2013 174 469
- US-A1- 2013 235 773
- US-A1- 2013 235 773
- US-A1- 2013 342 344
- US-A1- 2014 085 100
- US-A1- 2014 300 477
- US-A1- 2015 157 006
- US-A1- 2016 086 475
- US-A1- 2016 240 074
- US-A1- 2016 240 074
- BOB HEILE ET AL: "July2016-plenary-closing-report-for-802-1 5 ; 15-16-0575-00-0000-july2016-plenary-closin g-report-for-802-15", IEEE DRAFT; 15-16-0575-00-0000-JULY2016-PLENARY-CLOSIN G-REPORT-FOR-802-15, IEEE-SA MENTOR, PISCATAWAY, NJ USA , vol. 802.15 24 August 2016 (2016-08-24), pages 1-157, XP068107883, Retrieved from the Internet: URL:https://mentor.ieee.org/802.15/dcn/16/ 15-16-0575-00-0000-july2016-plenary-closin g-report-for-802-15.ppt [retrieved on 2016-08-24]

## Description

### Field of the Invention

The present invention is related to the field of pest control and pest trap monitoring and, more particularly, to a remote notification electronic rodent trapping system, and method having electronic rodent traps with long range wireless communication and trap status monitoring capability.

### Description of the Related Art

Rodent trap monitoring has typically required that the user come in close proximity to the trap to determine whether or not a rodent has been dispatched or the trap deactivated. Physically checking rodent traps can be inconvenient, particularly when the traps are located in a barn, attic, basement, crawl space, etc. Trap monitoring can also be very time consuming for users such as professional rodent control companies who place traps at multiple sites and then must physically visit each site on a regular basis to monitor the status of the traps and ensure traps are in an operational-ready state.

To address the problems associated with manual trap checking, electronic rodent control systems have been equipped with wireless communication. However, many state of the art wireless notification systems used in connection with rodent traps have very limited range due to the ISM frequency band they are operating in and the limits placed by the FCC and other governmental agencies for radios transmitting within these ISM frequency bands. One approach to increasing the range has been to place a greater number of traps in a network arrangement within which the traps communicate through one another, effectively forming a mesh network and/or acting as repeaters in relaying trap status information to a base station. A system of this type is disclosed in U.S. Patent No. 9, 743, 657 which is owned by the assignee of the present invention.

Alternately, dedicated or stand-alone repeaters may be incorporated within a remote monitoring rodent control system. In both cases, the overall system is made more complex, requiring more time and effort to install and introducing greater instability due to the larger number of communication links required. Such a configuration is known from WO 2012/054397 A1. US 2014/300477 A1 concerns pest control and pest trap monitoring and describes a remote notification electronic rodent trapping system comprising electronic rodent traps with wireless communication capability enabling remote monitoring of trap status.

Therefore, a need exists for a system and method that enables electronic rodent traps to be monitored remotely over a much wider geographical area, eliminating the need for an infrastructure including repeaters and other intervening communication devices so that system set up is faster and easier and system stability is enhanced.

### SUMMARY OF THE INVENTION

Accordingly, the present invention is directed to a remote notification electronic rodent trapping system and method according to claims 1 and 9. Preferred embodiments are set out in the dependent claims. The system includes one or more electronic rodent trapping devices having wireless communication capabilities using frequencies of less than 1 GHz and payloads of less than 256 bytes to enable the status of the traps to be remotely monitored over a wide geographical area. Particularly, the traps are capable of reporting their status to a base station or gateway as far away as ten miles or more, and to do so directly, i.e., without the use of repeaters. As a result, the system of the present invention allows for the monitoring of large commercial, urban, agricultural and residential areas while obviating the need for an infrastructure including complex networks of devices and repeaters.

The remote notification electronic rodent trapping system with long range monitoring capability according to the present invention is designed to work effectively with the rearming electronic killing traps disclosed in U.S. Patent No. 6,836,999 ("the '999 patent') which is also owned by the assignee of the present invention.

In view of the foregoing, one object of the present invention is to provide a remote notification electronic rodent trapping system and method with electronic rodent trapping devices having wireless remote notification capability that allows a user to monitor trap status through a base station or gateway device located at a distance of at least one mile or more, such as on the order of 2-10 miles away from each of the traps.

Another object of the present invention is to provide a remote notification electronic rodent trapping system and method that simultaneously monitors the status of a plurality of traps spaced at different locations from each other, the traps sending wireless communications to a gateway device using a frequency of less than 1 GHz.

Yet another object of the present invention is to provide a remote notification electronic rodent trapping system and method in accordance with the preceding objects in which the plurality of electronic rodent traps communicate with wireless transmissions each having a payload of not more than 256 bytes.

A further object of the present invention is to provide a remote notification electronic rodent trapping system and method in accordance with the preceding objects in which the plurality of traps communicate with public gateways operating on a like protocol in a manner like that between cell phones and cell towers.

A still further object of the present invention is to provide a remote notification electronic rodent trapping system and method in accordance with the preceding objects in which the traps communicate in a low power wide area network (LPWAN) such as LoRa, SigFox, Weightless, Ingenu and the like.

Yet another object of the present invention is to provide a remote notification electronic rodent trapping system and method in accordance with the preceding objects in which the system and method are embodied in accordance with one or more types of "cloud" computing.

These together with other objects and advantages which will become subsequently apparent reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

Figure 1 is a block diagram of a long range wireless notification electronic rodent trapping system in accordance with the present invention.
Figure 2 is a block diagram of one of the traps and the gateway shown in Figure 1.
Figure 3 is a block diagram of a LPWAN illustrating various communication protocols that may be selected in creating the network in accordance with the present invention.
Figure 4 is a flowchart of the method of operating the long range wireless notification electronic rodent trapping system in accordance with the present invention.

### DETAILED DESCRIPTION OF THE PREFERRED EMBODIMENTS

In describing preferred embodiments of the invention illustrated in the drawings, specific terminology will be resorted to for the sake of clarity.

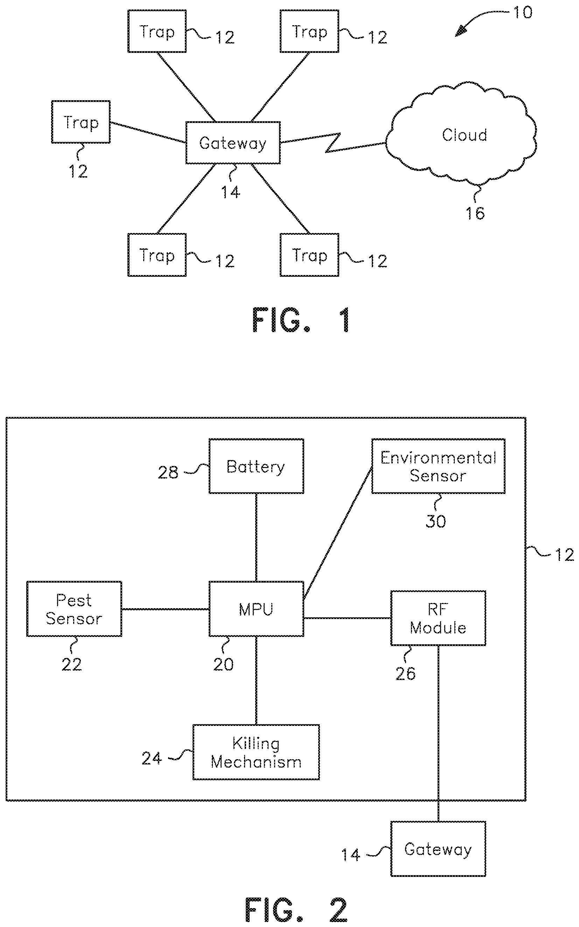

As shown in Figure 1, the present invention is directed to a long range remote notification electronic rodent trapping system and network generally designated by reference numeral 10. The network 10 includes a plurality of electronic rodent trapping devices or traps 12 and a gateway 14 that can be arranged in a star-type network like that shown in which the traps communicate directly with the gateway 14 with no need for repeaters or intercommunication between the traps. The gateway can be configured to communicate with the cloud 16, enabling trap status to be monitored by users at virtually any location as is known by persons skilled in the art. As used herein, "traps" and "trapping devices" are used interchangeably.

As shown in Figure 2, each of the traps 12 includes a microprocessing unit (MPU) 20 in communication with a rodent sensor 22, a killing mechanism 24, and an RF module 26 by which the trap communicates with the gateway 14. The trap also has a power source such as battery 28 and may further include an environmental sensor 30 that can be used to collect data in areas in which placement of such a sensor or sensors, on a dedicated basis, might otherwise be inconvenient or impractical, such as crawl spaces, attics or other relatively inaccessible locations where traps are often used effectively. While not necessary, equipping the trap with an environmental sensor 30, such as for ambient temperature, provides an extra functionality at minimal cost and no additional effort in terms of installation in the field.

Upon detecting the presence of a rodent with the pest sensor 22, the MPU 20 activates the killing mechanism 24 to dispatch the rodent. Electronic rodent traps having a killing circuit operative with a MPU are disclosed in the '999 patent. In addition to the electronic rodent trapping devices disclosed in the '999 patent, the trapping devices 12 used in conjunction with the present invention may be of the types disclosed in U.S. Patents Nos, 7,219,466; 7,690,147; and 7,757,430, all of which are owned by the assignee of the present invention. Therefore, the trapping devices described herein may be rearming traps having two or more killing plates, or include other types of electronic or electro-mechanical traps configured to dispatch rodents, including either or both of mouse and rat killing capabilities. Use of the system and method set forth herein with traps that monitor rodent presence without a killing mechanism is also contemplated and therefore within the scope of the present invention.

The gateway 14 used by the trapping devices 12 may be a public gateway operating on a like protocol in a manner like that used with cellular devices in which cell phones communicate with cell towers not owned by the end user. Alternatively, the gateway 14 may be established by the owner of an individual system such that the network 10 over which the traps communicate is private. In this case, the owner purchases a long-range gateway and sets up a personal facility through which all of the trapping devices connect.

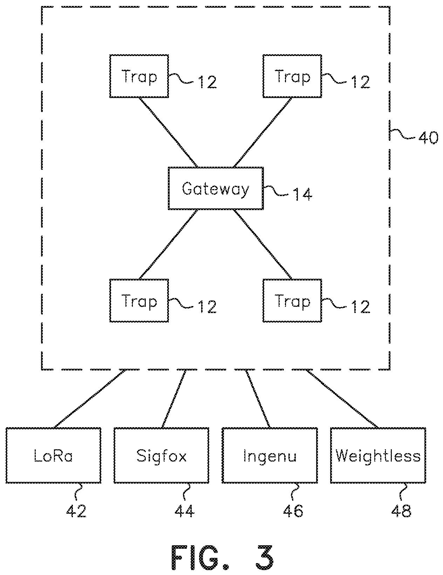

As depicted in Figure 3, the traps 12 communicate with at least one gateway 14 preferably within a low power wide area network (LPWAN) 40. Depending on the communication protocol used, the LPWAN 40 may be a LoRa network 42, a Sigfox network 44, an Ingenu network 46, a Weightless network 48, or other network used to provide machine to machine connections in the manner described herein. In connection with Figure 3, it is to be understood that the network types 42-48, which are shown as being "connected" to the LPWAN 40, are intended to represent, within a single drawing figure, alternative communication protocols that may be used individually in configuring the LPWAN 40.

According to the method of the present invention, the plurality of electronic trapping devices 12 send wireless transmissions including trap status data to the gateway 14. Using frequencies of less than 1 GHz, the traps are capable of reporting their status to the gateway over a distance of at least one mile away, with communication capability ranges extending outwardly on the order of up to about ten miles away, without the use of repeaters. The transmissions carry a small payload of not greater than 256 bytes, which optimizes range and battery life. As a result, the system of the present invention allows for the monitoring of large commercial, urban, agricultural and residential areas while obviating the need for an infrastructure including complex networks of devices and repeaters. By eliminating the need to install permanent network components, system setup is fast as well as easily modifiable.

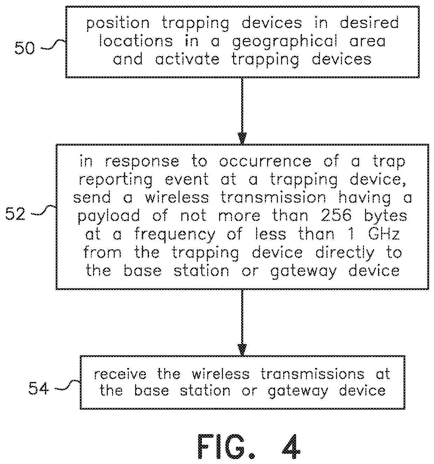

A flowchart of the method of remotely monitoring a plurality of electronic rodent trapping devices through a base station or gateway device in accordance with the present invention is set forth in Figure 4. The method includes positioning a plurality of trapping devices in desired locations in a geographical area and activating the trapping devices, step 50; in response to the occurrence of a trap reporting event at a trapping device, sending a wireless transmission having a payload of not more than 256 bytes at a frequency of less than 1 GHz from the trapping device to the base station or gateway device, step 52; and receiving the wireless transmission at the base station or gateway device, step 54. The transmissions are sent directly to the base station or gateway device without using any intervening repeating devices. When positioning the plurality of trapping devices, the trapping devices may be in various locations at a range of up to 10 miles away from the base station or gateway device.

The occurrence of a trap reporting event, step 52, may include activation of the pest sensor 22, activation of the killing mechanism 24, the elapsing of a preset time period between periodic trap status update transmissions, a low battery condition, and the like, with the understanding that the system and method may be configured to define other occurrences as "reporting events", i.e., events that initiate the sending of a trapping device transmission, as would be understood by persons of ordinary skill in the art. The operation of the trapping devices following a transmission depends upon the nature of the reporting event as well as the specific configuration of the trapping devices. Reference is made to the foregoing identified patents, for some of the possible trapping device operational configurations that may be implemented effectively and used with the long range wireless notification system and method for electronic rodents traps of the present invention.

The invention described herein provides an improved system and method for monitoring electronic rodent traps that provides greatly increased range in a way not previously considered applicable to the field of rodent control devices. In the case of public gateways, while cell phones use cell towers in like manner to that with which the traps can communicate through a gateway as described herein, it has not been known to use such technology with pest control devices that have a fixed location in use but which can be moved to and then used in a different location very easily, such as electronic rodent traps. The long range gateway and trap communication using long range radio frequency modules described herein provide a degree of flexibility and ease of set up and use not previously available or contemplated in connection with electronic rodent trap monitoring systems and methods.

## Claims

1. A remote notification electronic rodent trapping system (10) comprising:
a base station or gateway device (14); and
a plurality of electronic rodent trapping devices (12), each of said rodent trapping devices (12) including an RF module (26) for sending wireless transmissions to the base station or gateway device (14), and sending the wireless transmission at a frequency of less than 1 GHz over a low power wide area network (LPWAN) (40), each wireless transmission having a payload of not more than 256 bytes, said frequency and payload size providing long range wireless remote notification capability while communicating directly with the base station or gateway device (14) without using repeaters and wherein the rodent trapping device (12) has an electric or electronic-mechanical trap configured to dispatch rodents, wherein the plurality of trapping devices (12) are spaced at different geographical locations from each other and can communicate directly with the base station or gateway (14) at distances of up to at least one mile.

2. The remote notification electronic rodent trapping system (10) as set forth in claim 1 the distances are of up to about 10 miles away from the base station or gateway (14).

3. The remote notification electronic rodent trapping system (10) as set forth in claim 1, wherein the LPWAN (40) is selected from the group consisting of a LoRa network (42), a Sigfox network (44) and an Ingenu network (46).

4. The remote notification electronic rodent trapping system (10) as set forth in claim 1, wherein the trapping devices (12) are arranged in a star network topology.

5. The remote notification electronic rodent trapping system (10) as set forth in claim 1, wherein each of the trapping devices (12) further includes a pest sensor (22) and a killing mechanism (24), and preferably at least one of the trapping devices (12) further includes an environmental sensor (30).

6. The remote notification electronic rodent trapping system (10) as set forth in claim 5, wherein the environmental sensor (30) senses ambient temperature.

7. The remote notification electronic rodent trapping system (10) as set forth in claim 1, wherein the plurality of trapping devices (12) use public gateways.

8. The remote notification electronic rodent trapping system (10) as set forth in claim 1, wherein the system is embodied in accordance with one or more types of cloud computing.

9. A method of remotely monitoring a plurality of electronic rodent trapping devices (12) of a rodent trapping system (10) according to claim 1 through a base station or gateway device (14) comprising:
positioning the plurality of trapping devices (12) in a geographical area;
sending wireless transmissions each having a payload of not more than 256 bytes from the trapping devices (12) to the base station or gateway device (14) at a frequency of less than 1 GHz over a low power wide area network (LPWAN) (40), the wireless transmissions can be transmitted directly to the base station or gateway device (14) without use of any intervening repeating devices; and receiving the wireless transmissions at the base station or gateway device (14).

10. The method as set forth in claim 9, wherein the trapping devices (12) are placed at various locations at a range of up to 10 miles away from the base station or gateway device (14).

11. The method as set forth in claim 9, wherein the LPWAN (40) is selected from the group consisting of a LoRa network (42), a Sigfox network (44) and an Ingenu network (46).

12. The method as set forth in claim 9, wherein the step of sending wireless transmissions is taken in response to occurrence of a trap reporting event.

13. The method as set forth in claim 12, wherein at least some of the electronic rodent trapping devices (12) include a killing mechanism (24) and the trap reporting event leading to the sending of a wireless transmission includes activation of the killing mechanism (24).

14. The method as set forth in claim 9, wherein the plurality of trapping devices (12) communicate with public gateways.

15. The method as set forth in claim 9, wherein the method includes use of one or more types of cloud computing.

## Patentansprüche

1. Elektronisches Nagetierfallensystem (10) mit Fernbenachrichtigung, umfassend:
eine Basisstation oder Gateway-Vorrichtung (14); und
eine Vielzahl elektronischer Nagetierfallenvorrichtungen (12), wobei jede der Nagetierfallenvorrichtungen (12) ein HF-Modul (26) zum Senden von drahtlosen Übertragungen an die Basisstation oder Gateway-Vorrichtung (14) beinhaltet, und
Senden der drahtlosen Übertragung mit einer Frequenz von weniger als 1 GHz über ein Low Power Wide Area Network (LPWAN) (40), wobei jede drahtlose Übertragung eine Nutzlast von nicht mehr als 256 Bytes aufweist, wobei die Frequenz und die Nutzlastgröße für Eignung für drahtlose Fernbenachrichtigung mit großer Reichweite sorgen, während direkt mit der Basisstation oder Gateway-Vorrichtung (14) kommuniziert wird, ohne Repeater zu verwenden, und wobei die Nagetierfallenvorrichtung (12) eine elektrische oder elektronisch-mechanische Falle aufweist, die zum Vertreiben von Nagetieren konfiguriert ist, wobei die Vielzahl von Fallenvorrichtungen (12) an unterschiedlichen geografischen Standorten voneinander beabstandet sind und über Entfernungen von bis zu mindestens einer Meile direkt mit der Basisstation oder dem Gateway (14) kommunizieren können.

2. Elektronisches Nagetierfallensystem (10) mit Fernbenachrichtigung nach Anspruch 1, wobei die Entfernungen bis zu etwa 10 Meilen von der Basisstation oder dem Gateway (14) betragen.

3. Elektronisches Nagetierfallensystem (10) mit Fernbenachrichtigung nach Anspruch 1, wobei das LPWAN (40) ausgewählt ist aus der Gruppe bestehend aus einem LoRa-Netzwerk (42), einem Sigfox-Netzwerk (44) und einem Ingenu-Netzwerk (46).

4. Elektronisches Nagetierfallensystem (10) mit Fernbenachrichtigung nach Anspruch 1, wobei die Fallenvorrichtungen (12) in einer Sternnetzwerktopologie angeordnet sind.

5. Elektronisches Nagetierfallensystem (10) mit Fernbenachrichtigung nach Anspruch 1, wobei jede der Fallenvorrichtungen (12) weiter einen Schädlingssensor (22) und einen Tötungsmechanismus (24) beinhaltet, und vorzugsweise mindestens eine der Fallenvorrichtungen (12) weiter einen Umgebungssensor (30) beinhaltet.

6. Elektronisches Nagetierfallensystem (10) mit Fernbenachrichtigung nach Anspruch 5, wobei der Umgebungssensor (30) die Umgebungstemperatur erfasst.

7. Elektronisches Nagetierfallensystem (10) mit Fernbenachrichtigung nach Anspruch 1, wobei die Vielzahl von Fallenvorrichtungen (12) öffentliche Gateways verwenden.

8. Elektronisches Nagetierfallensystem (10) mit Fernbenachrichtigung nach Anspruch 1, wobei das System gemäß einer oder mehreren Arten von Cloud Computing ausgeführt ist.

9. Verfahren zur Fernüberwachung einer Vielzahl elektronischer Nagetierfallenvorrichtungen (12) eines Nagetierfallensystems (10) nach Anspruch 1 über eine Basisstation oder Gateway-Vorrichtung (14), umfassend:
Positionieren der Vielzahl von Fallenvorrichtungen (12) in einem geografischen Gebiet;
Senden von drahtlosen Übertragungen, die jeweils eine Nutzlast von nicht mehr als 256 Bytes aufweisen, von den Fallenvorrichtungen (12) mit einer Frequenz von weniger als 1 GHz über ein Low Power Wide Area Network (LPWAN) (40) an die Basisstation oder Gateway-Vorrichtung (14), wobei die drahtlosen Übertragungen direkt an die Basisstation oder Gateway-Vorrichtung (14) übertragen werden können, ohne Verwendung zwischengeschalteter Repeater-Vorrichtungen; und
Empfangen der drahtlosen Übertragungen an der Basisstation oder Gateway-Vorrichtung (14).

10. Verfahren nach Anspruch 9, wobei die Fallenvorrichtungen (12) an verschiedenen Standorten in einem Umkreis von bis zu 10 Meilen von der Basisstation oder Gateway-Vorrichtung (14) platziert sind.

11. Verfahren nach Anspruch 9, wobei das LPWAN (40) ausgewählt ist aus der Gruppe bestehend aus einem LoRa-Netzwerk (42), einem Sigfox-Netzwerk (44) und einem Ingenu-Netzwerk (46).

12. Verfahren nach Anspruch 9, wobei der Schritt des Sendens von drahtlosen Übertragungen in Reaktion auf das Auftreten eines Fallenmeldeereignisses erfolgt.

13. Verfahren nach Anspruch 12, wobei mindestens einige der elektronischen Nagetierfallenvorrichtungen (12) einen Tötungsmechanismus (24) beinhalten, und das Fallenmeldeereignis, das zum Senden einer drahtlosen Übertragung führt, die Aktivierung des Tötungsmechanismus (24) beinhaltet.

14. Verfahren nach Anspruch 9, wobei die Vielzahl von Fallenvorrichtungen (12) mit öffentlichen Gateways kommunizieren.

15. Verfahren nach Anspruch 9, wobei das Verfahren die Verwendung einer oder mehrerer Arten von Cloud Computing beinhaltet.

## Revendications

1. Système électronique de piégeage de rongeurs à notification à distance (10) comprenant :
une station de base ou un dispositif de passerelle (14) ; et
une pluralité de dispositifs électroniques de piégeage de rongeurs (12), chacun desdits dispositifs de piégeage de rongeurs (12) incluant un module RF (26) pour envoyer des transmissions sans fil à la station de base ou au dispositif de passerelle (14), et
envoyer la transmission sans fil à une fréquence inférieure à 1 GHz sur un réseau étendu à faible puissance (LPWAN) (40), chaque transmission sans fil présentant une charge utile ne dépassant pas 256 octets, ladite fréquence et ladite taille de charge utile fournissant une capacité de notification à distance sans fil à longue portée tout en communiquant directement avec la station de base ou le dispositif de passerelle (14) sans utiliser de répéteurs et dans lequel le dispositif de piégeage de rongeurs (12) présente un piège électrique ou électromécanique configuré pour tuer des rongeurs, dans lequel la pluralité de dispositifs de piégeage (12) sont espacés à des emplacements géographiques différents les uns des autres et peuvent communiquer directement avec la station de base ou la passerelle (14) à des distances allant jusqu'à au moins un mile (1,609 km).

2. Système électronique de piégeage de rongeurs à notification à distance (10) selon la revendication 1, dans lequel les distances vont jusqu'à environ 10 miles (16 km) de la station de base ou de la passerelle (14).

3. Système électronique de piégeage de rongeurs à notification à distance (10) selon la revendication 1, dans lequel le LPWAN (40) est sélectionné dans le groupe consistant en un réseau LoRa (42), un réseau Sigfox (44) et un réseau Ingenu (46).

4. Système électronique de piégeage de rongeurs à notification à distance (10) selon la revendication 1, dans lequel les dispositifs de piégeage (12) sont agencés selon une topologie de réseau en étoile.

5. Système électronique de piégeage de rongeurs à notification à distance (10) selon la revendication 1, dans lequel chacun des dispositifs de piégeage (12) inclut en outre un détecteur de parasites (22) et un mécanisme de mise à mort (24), et de préférence au moins l'un des dispositifs de piégeage (12) inclut en outre un capteur environnemental (30).

6. Système électronique de piégeage de rongeurs à notification à distance (10) selon la revendication 5, dans lequel le capteur environnemental (30) détecte la température ambiante.

7. Système électronique de piégeage de rongeurs à notification à distance (10) selon la revendication 1, dans lequel la pluralité de dispositifs de piégeage (12) utilisent des passerelles publiques.

8. Système électronique de piégeage de rongeurs à notification à distance (10) selon la revendication 1, dans lequel le système est réalisé conformément à un ou plusieurs types d'informatique en nuage.

9. Procédé de surveillance à distance d'une pluralité de dispositifs électroniques de piégeage de rongeurs (12) d'un système de piégeage de rongeurs (10) selon la revendication 1 par l'intermédiaire d'une station de base ou d'un dispositif de passerelle (14) comprenant :
le positionnement de la pluralité de dispositifs de piégeage (12) dans une zone géographique ;
l'envoi de transmissions sans fil présentant chacune une charge utile ne dépassant pas 256 octets depuis les dispositifs de piégeage (12) vers la station de base ou le dispositif de passerelle (14) à une fréquence inférieure à 1 GHz sur un réseau étendu à faible puissance (LPWAN) (40), les transmissions sans fil peuvent être transmises directement à la station de base ou au dispositif de passerelle (14) sans utiliser aucun dispositif de répétition intermédiaire ; et
la réception des transmissions sans fil au niveau de la station de base ou du dispositif de passerelle (14).

10. Procédé selon la revendication 9, dans lequel les dispositifs de piégeage (12) sont placés à divers emplacements à une distance allant jusqu'à 10 miles (16 km) de la station de base ou du dispositif de passerelle (14).

11. Procédé selon la revendication 9, dans lequel le LPWAN (40) est sélectionné dans le groupe consistant en un réseau LoRa (42), un réseau Sigfox (44) et un réseau Ingenu (46).

12. Procédé selon la revendication 9, dans lequel l'étape d'envoi de transmissions sans fil est entreprise en réponse à l'occurrence d'un événement de rapport de piège.

13. Procédé selon la revendication 12, dans lequel au moins certains des dispositifs électroniques de piégeage de rongeurs (12) incluent un mécanisme de mise à mort (24) et l'événement de rapport de piège conduisant à l'envoi d'une transmission sans fil inclut l'activation du mécanisme de mise à mort (24).

14. Procédé selon la revendication 9, dans lequel la pluralité de dispositifs de piégeage (12) communiquent avec des passerelles publiques.

15. Procédé selon la revendication 9, dans lequel le procédé inclut l'utilisation d'un ou plusieurs types d'informatique en nuage.
